**Europäisches Patentamt**

**European Patent Office**

**Office européen des brevets**

(19)

(11) Numéro de publication: **0 065 441**

**B1**

(12) **FASCICULE DE BREVET EUROPEEN**

(45) Date de publication du fascicule du brevet: **02.09.87**

(51) Int. Cl.⁴: **G 01 K 7/22**

(21) Numéro de dépôt: **82400764.5**

(22) Date de dépôt: **28.04.82**

(54) **Perfectionnements aux capteurs de température.**

(30) Priorité: **07.05.81 FR 8109058**

(43) Date de publication de la demande:
**24.11.82 Bulletin 82/47**

(45) Mention de la délivrance du brevet:
**02.09.87 Bulletin 87/36**

(84) Etats contractants désignés:
**BE CH DE FR GB IT LI NL**

(56) Documents cités:
**FR-A-2 348 550**
**FR-A-2 389 109**
**FR-A-2 422 944**
**FR-A-2 440 545**
**FR-A-2 462 694**

(73) Titulaire: **SAUNIER DUVAL EAU CHAUDE
CHAUFFAGE - SDECC
"Les Miroirs" 18 Avenue d'Alsace
F-92400 Courbevoie (FR)**

(72) Inventeur: **Boulle, Franck
18, rue Louis Jacolliot
F-77400 Lagny-Sur-Marne (FR)**
Inventeur: **Vaton, Patrice
33, rue Jena Sanu
F-94500 Champigny-Sur-Marne (FR)**
Inventeur: **Zveguintzoff, Michel
97/125, avenue R. Salengro
F-92290 Chatenay-Malabry (FR)**

(74) Mandataire: **Lhuillier, René
ARMENGAUD JEUNE CABINET LEPEUDRY 6,
rue du Fg. St-Honoré
F-75008 Paris (FR)**

Courier Press, Leamington Spa, England.

EP 0 065 441 B1

## Description

La présente invention se rapporte aux capteurs de température destinés à être installés dans une paroi en contact avec le fluide dont la température doit être mesurée.

On connaît des capteurs de température constitués par des thermistances utilisées, soit en capteur passif de température d'une paroi métallique pour la mesure et le contrôle permanent de la température de cette paroi, soit un capteur actif ou dynamique de température d'une paroi métallique en vue d'assurer directement la commande d'un organe électronique de régulation ou de commande de l'arrivée du gaz au brûleur d'un appareil d'utilisation du gaz.

Mais ces thermistances, comme le montre FR—A—2 348 550, qui ont généralement la forme d'un disque et qui sont insérées dans un doigt de gant en toile tissée et dans un boîtier métallique de forme identique pour assurer simultanément un bon contact thermique et une bonne isolation électrique, présentent des inconvénients. En effet, ces thermistances sont bien souvent peu précises et ont une mauvaise tolérance. De plus leurs résistances qui varient selon une exponentielle en fonction de la température du fluide à mesurer, ont tendance à se détériorer dans le temps.

On connaît également des éléments sensibles à la température qui comportent une petite pastille au silicium dopé formant la résistance variable, qui forment des capteurs de température stables et précis dans le temps et de caractéristiques uniformes. Mais ces éléments sensibles tels que décrits par exemple dans FR—A—2 422 944 sont tellement petits qu'il est nécessaire de prévoir un montage particulier.

L'invention a donc pour objet un capteur de température qui évite ces inconvénients et qui permet d'utiliser les mêmes doigts de gant et boîtiers métalliques que pour des thermistances classiques.

Suivant l'invention, l'élément sensible à la température est directement soudé sur une lame métallique support présentant un évidement central laissant subsister une ou deux languettes pour la fixation de l'ensemble dans un boîtier de forme plate, en matière isolante, surmoulé sur deux broches de connexion.

D'autres caractéristiques et avantages de l'invention apparaîtront à la lecture de la description suivante d'une forme de réalisation en référence aux dessins qui représentent:

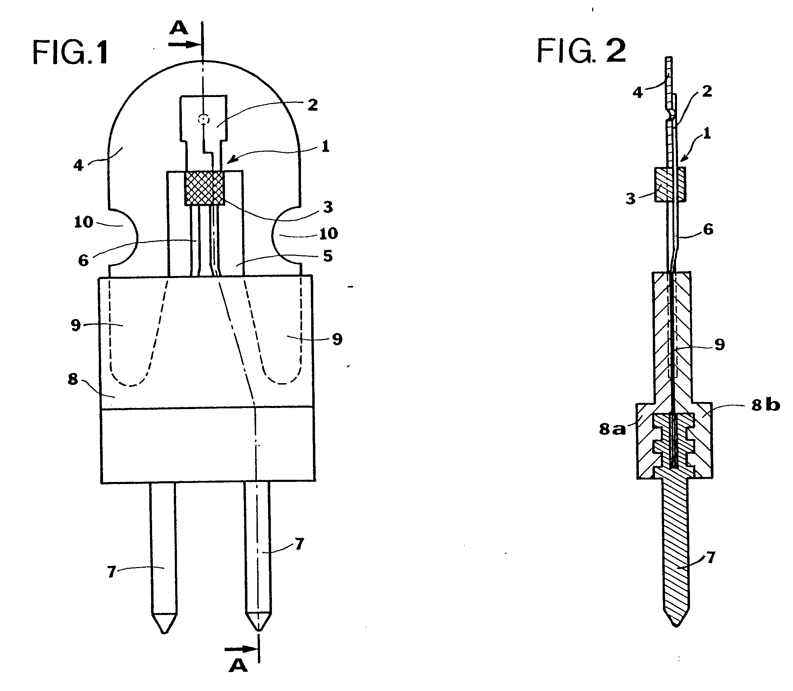

— figure 1: une vue en plan du capteur de température conforme à l'invention,

— figure 2: une vue en coupe suivant la ligne AA de la figure 1.

Le capteur de température se compose d'un élément sensible 1 formé par une petite plaque 2 sur laquelle est montée une pastille 3 de silicium dopé constituant la résistance dudit élément. La petite plaque 2 est soudée sur une lame métallique support 4 par exemple en cuivre dont l'extrémité arrondie a la forme d'un disque de faible épaisseur. Ce support présente du côté opposé à l'endroit où est soudé la petite plaque 2 un évidement central 5 laissant subsister deux languettes 9. Cet évidement 5 permet également le positionnement de la pastille 3 et le passage des fils électriques 6 qui relient entre eux ladite pastille avec deux broches de connexion 7.

Un boîtier 8 de forme plate en matière isolante surmoulée sur les deux broches de connexion 7 et formé de deux demi-coquilles symétriques 8a et 8b maintien en position, l'ensemble lame métallique support 4 et élément sensible 1, par l'intermédiaire des deux languettes 9.

La lame métallique support 4 qui a une largeur sensiblement égale à 10 mm et une épaisseur de l'ordre de 0,3 mm comporte des encoches latérales 10 pour la fixation d'une gaine ou d'un doigt de gant en toile tissée dans lequel elle est insérée.

La lame métallique support 4 ayant sensiblement la même forme et les mêmes dimensions qu'une thermistance classique permet d'utiliser des doigts de gant en toile tissée et des boîtiers métalliques absolument identiques pour assurer un bon contact thermique et une bonne isolation électrique. Ce contact thermique est également accentué par le support 4 en cuivre qui joue le rôle d'un radiateur thermique et aide l'élément sensible 1 à mesurer la température du fluide tout en assurant une protection mécanique de l'élément sensible 1.

## Revendications

1. Capteur de température comportant un élément sensible (1) formé par un petite plaque (2) sur laquelle est montée une pastille de silicium dopé (3), caractérisé en ce que la petite plaque (2) est soudée sur une lame métallique support (4) présentant du côté opposé à l'endroit où est soudé ladite plaque, un évidement central (5) laissant subsister une ou deux languettes (9) permettant la fixation de l'ensemble ainsi réalisé dans un boîtier (8) de forme plate, en matière isolante, surmoulé sur deux broches de connexion (7).

2. Capteur de température selon la revendication 1, caractérisé en ce que le boîtier (8) est formé de deux demi-coquilles symétriques (8a—8b).

3. Capteur de température selon la revendication 1, caractérisé en ce que la lame métallique support (4) comporte des encoches latérales (10) pour la fixation d'une gaine ou d'une doigt de gant en toile tissée dans lequel elle est insérée.

4. Capteur de température selon la revendication 1, caractérisé en ce que l'extrémité de la lame support (4) a la forme d'un disque.

5. Capteur de température selon la revendication 1, caractérisé en ce que la lame support (4) est en cuivre.

6. Capteur de température selon le revendication 1, caractérisé en ce que la largeur de la lame support (4) est sensiblement égale à 10 mm pour une épaisseur de 0,3 mm.

**Patentansprüche**

1. Temperaturdetektor mit einem Sensorelement (1), das von einer kleinen Platte (2) gebildet wird, auf der eine Pastille aus dotiertem Silizium (3) montiert ist, dadurch gekennzeichnet, daß die kleine Platte (2) auf ein metallisches Tragplättchen (4) gelötet ist, das an der dem Bereich, wo die Platte angelötet ist, gegenüberliegenden Seite eine zentrale Ausnehmung (5) aufweist, die eine oder zwei Zungen (9) weiterbestehen läßt, die eine Befestigung der so realisierten Einheit in einem Gehäuse (8) mit flacher Form aus Isoliermaterial ermöglichen, das um zwei Anschlußzapfen (7) geformt ist.

2. Temperaturdetektor nach Anspruch 1, dadurch gekennzeichnet, daß das Gehäuse (8) aus zwei symmetrischen Halbschalen (8a—8b) gefertigt ist.

3. Temperaturdetektor nach Anspruch 1, dadurch gekennzeichnet, daß das metallische Tragplättchen (4) seitliche Ausnehmungen (10) für die Befestigung einer Hülle oder eines Fingerhutes aus einem Gewebe aufweist, worin sie eingesetzt ist.

4. Temperaturdetektor nach Anspruch 1, dadurch gekennzeichnet, daß der Endbereich des Tragplättchens (4) die Form einer Scheibe hat.

5. Temperaturdetektor nach Anspruch 1, dadurch gekennzeichnet, daß das Tragplättchen (4) aus Kupfer gefertigt ist.

6. Temperaturdetektor nach Anspruch 1, dadurch gekennzeichnet, daß die Breite des Tragplättchens (4) bei einer Dicke von 0,3 mm im wesentlichen 10 mm entspricht.

**Claims**

1. Temperature sensor comprising a sensitive element (1) consisting of a small plate (2) on which is mounted a doped silicon chip (3), characterized in that the small plate (2) is welded onto a metal support blade (4) having, on the side opposite to the place where the said plate is welded, a central recess (5) leaving remaining one or two small tongues (9) allowing the assembly thus produced to be fastened into a flat-shaped casing (8) of insulating material, moulded onto two connecting pins (7).

2. Temperature sensor according to Claim 1, characterized in that the casing (8) consists of two symmetrical half-shells (8a—8b).

3. Temperature sensor according to Claim 1, characterized in that the metal support blade (4) comprises side cutouts (10) for fastening a sheath or a glove finger, made of woven cloth, into which it is inserted.

4. Temperature sensor according to Claim 1, characterized in that the end of the support blade (4) is disc-shaped.

5. Temperature sensor according to Claim 1, characterized in that the support blade (4) is made of copper.

6. Temperature sensor according to Claim 1, characterized in that the width of the support blade (4) is substantially equal to 10 mm for a thickness of 0.3 mm.

FIG.1

FIG. 2